Europäisches Patentamt

European Patent Office

Office européen des brevets

(11) Veröffentlichungsnummer: **0 477 516 A1**

# EUROPÄISCHE PATENTANMELDUNG

(21) Anmeldenummer: **91113488.0**

(22) Anmeldetag: **12.08.91**

(51) Int. Cl.5: **C08G 18/79**, B01J 31/24, B01J 32/00

(30) Priorität: **24.08.90 DE 4026705**

(43) Veröffentlichungstag der Anmeldung:
**01.04.92 Patentblatt 92/14**

(84) Benannte Vertragsstaaten:
**DE ES FR GB IT NL**

(71) Anmelder: **BAYER AG**

**W-5090 Leverkusen 1 Bayerwerk(DE)**

(72) Erfinder: **Scholl, Hans Joachim, Dr.
Am Feldrain 5
W-5000 Köln 80(DE)**

(54) Dimerisierungskatalysatoren, ein Verfahren zu ihrer Herstellung und ihre Verwendung bei der Herstellung von Uretdion- und Isocyanuratgruppen aufweisenden Polyisocyanaten.

(57) Für die Heterogenkatalyse geeignete Dimerisierungskatalysatoren für organische Isocyanate, bestehend aus tertiären Phosphinen die an ausgewählten Trägermaterialien adsorbiert vorliegen, ein Verfahren zur Herstellung dieser Katalysatoren durch Aufziehen der tertiären Phosphine auf das Trägermaterial und die Verwendung der Katalysatoren bei der Herstellung von Uretdion- und Isocyanuratgruppen aufweisenden Polyisocyanaten.

EP 0 477 516 A1

Die Erfindung betrifft neue, für die Heterogenkatalyse, insbesondere als Festbettkatalysatoren geeignete Dimerisierungskatalysatoren für organische Isocyanate, ein Verfahren zu ihrer Herstellung und ihre Verwendung bei der Herstellung von Uretdion- und Isocyanuratgruppen aufweisenden Polyisocyanaten.

Katalysatoren zur Dimerisierung organischer Isocyanate sind in großer Zahl bekannt (Alfred Hassner, Small Ring Heterocycles - Part 2, S. 522-526, John Wiley and Sons, New York, 1983). Nach der Lehre der DE-OS 34 32 081 (US 46 14 785) werden mit Vorteil tertiäre Phosphine verwendet.

Es handelt sich hierbei im allgemeinen um in homogener Phase einzusetzende Katalysatoren, die den als Ausgangsmaterialien eingesetzten Diisocyanaten in oftmals beträchtlichen Mengen zugesetzt werden und anschließend desaktiviert werden müssen.

Die bekannten Verfahren zur Herstellung von dimerisierten Diisocyanaten (vgl. z.B. auch DE-OS 16 70 720) sind jedoch nicht optimal für eine großtechnische Herstellung geeignet. Die Nachteile dieser vorbeschriebenen Verfahren sind vor allem in den verhältnismäßig hohen Mengen an Katalysatoren zu sehen, die zur Folge haben, daß eine entsprechend hohe Menge an Desaktivatoren eingesetzt werden muß, so daß die dimerisierten Diisocynate einen verhältnismäßig hohen Anteil an unerwünschten, die Eigenschaften der aus den Diisocyanaten hergestellten Polyurethankunststoffe nachteilig beeinflussenden Fremdstoffen enthalten.

Nach der Lehre der DE-OS 3 809 261 kann die Katalysatormenge verringert werden, wenn, wie am Beispiel Hexamethylendiisocyanat (HDI) ausgeführt wird, kohlendioxidfreies HDI verwendet wird. Dennoch sind auch in diesem Fall, ganz abgesehen von dem beschriebenen aufwendigen Reinigungsverfahren, noch erhebliche Mengen an homogenem Katalysator einzusetzen, die entsprechend erhebliche Mengen an Desaktivatoren erforderlich machen.

Es war daher die der Erfindung zugrundeliegende Aufgabe, neue Dimerisierungskatalysatoren für organische Isocyanate zur Verfügung zu stellen, die für die Heterogenkatalyse, insbesondere als Festbettkatalysatoren geeignet sind, so daß die unter Verwendung dieser Katalysatoren hergestellten Polyisocyanate mit Uretdion- und Isocyanuratstruktur nach Abtrennung des Heterogenkatalysators ohne Zusatz der benannten Desaktivatoren der Aufarbeitung zugeführt werden können, vorzugsweise unter Zusatz geringer Mengen saurer Verbindungen als Stabilisator.

Diese Aufgabe konnte durch die Bereitstellung der nachstehend näher beschriebenen erfindungsgemäßen Dimerisierungskatalysatoren gelöst werden.

Gegenstand der Erfindung sind für die Heterogenkatalyse geeignete Dimerisierungskatalysatoren für organische Isocyanate, bestehend aus an porösen Trägermaterialien adsorbiert vorliegenden tertiären Phosphinen, dadurch gekennzeichnet, daß das Trägermaterial aus einem Adsorbens der Korngröße (90 %) 0,1 bis 10 mm, eines Porenvolumens von 0,4 bis 1,4 ml/g, eines mittleren Porendurchmessers von 5 bis 50 nm und einer spezifischen Oberfläche (BET) von 100 bis 700 m²/g besteht.

Gegenstand der Erfindung ist auch ein Verfahren zur Herstellung dieser Katalysatoren durch Aufziehen von tertiärem Phosphin, gegebenenfalls unter Mitverwendung von inerten Lösungsmitteln, auf ein Trägermaterial, dadurch gekennzeichnet, daß das Trägermaterial aus einem Adsorbens der Korngröße (90 %) 0,1 bis 10 mm, eines Porenvolumens von 0,4 bis 1,4 ml/g, eines mittleren Porendurchmessers von 5 bis 50 nm und einer spezifischen Oberfläche (BET) von 100 bis 700 m²/g besteht.

Gegenstand der Erfindung ist schließlich auch die Verwendung der Katalysatoren bei der Herstellung von Uretdion- und Isocyanuratgruppen aufweisenden Polyisocyanaten durch Dimerisierung und Trimerisierung eines Teils der Isocyanatgruppen von organischen Diisocyanaten.

Bei den erfindungswesentlichen Trägermaterialien handelt es sich um anorganische oder organische, poröse kugelförmige Adsorbentien der bereits obengenannten Kenndaten. Vorzugsweise weisen die als Trägermaterialien zum Einsatz gelangenden Adsorbentien eine Teilchengröße (90 %) von 0,2 bis 5 mm, ein Porenvolumen von 0,6 bis 1,2 ml/g, einen mittleren Porendurchmesser von 7 bis 30 nm und eine spezifische Oberfläche von 110 bis 600 m²/g auf.

Gut geeignet sind beispielsweise handelsübliche, diesen Angaben entsprechende, im wesentlichen aus Siliciumdioxid bestehende, kugelförmige Trägermaterialien, wie sie von der Firma Grace GmbH, D 6520 Worms unter der Bezeichnung "GRACE Bead Type Silica Catalyst Supports C 10 bzw. C 15" vertrieben werden oder diesen Angaben entsprechende kugelförmige Adsorbermaterialien auf Basis von polymerem Divinylbenzol, wie sie von der Firma Bayer AG, Leverkusen unter der Bezeichnung ®LEWATIT VP OC 1062 vertrieben werden.

Zur Herstellung der erfindungsgemäßen Trägerkatalysatoren geeignete Phosphine sind beliebige tertiäre Phosphine, beispielsweise die in US-PS 46 14 785, Kolonne 4, Zeilen 11 bis 47 beispielhaft genannten Verbindungen.

Geeignet sind beispielsweise Trialkylphosphine mit insgesamt 12 bis 24 Kohlenstoffatomen wie z.B. Tri-n-butylphosphin oder Tri-n-octylphosphin. Tri-n-butylphosphin ist besonders gut als Modifizierungskatalysator geeignet.

Das "Aufziehen" des tertiären Phosphins auf das poröse Trägermaterial erfolgt vorzugsweise unter Mithilfe von niedrigsiedenden Lösungsmitteln wie z.B. Methanol, Ethanol, Isopropanol oder Diisopropylether, indem das Trägermaterial im Lösungsmittel aufgenommen wird (ca. 2- bis 3-fache Gewichtsmenge Lösungsmittel), das tertiäre Phosphin unter Rühren und Schutzgas zudosiert wird und das niedrigsiedende Lösungsmittel anschließend im Vakuum abgezogen wird.

Im allgemeinen werden die Mengen des tertiären Phosphins bzw. des Trägermaterials so bemessen, daß letztendlich erfindungsgemäße Trägerkatalysatoren mit einem Phosphingehalt von 0,02 bis 2 mmol Phosphin, vorzugsweise 0,05 bis 0,6 mmol Phosphin pro g Trägermaterial resultieren.

Die auf diese Weise erhaltenen Dimerisierungskatalysatoren eignen sich ausgezeichnet zur Heterogenkatalyse, d.h. insbesondere als Festbettkatalysatoren, bei der katalytischen Herstellung von Uretdion- und Isocyanuratgruppen aufweisenden Polyisocyanaten auf Basis von einfachen organischen Diisocyanaten insbesondere solchen mit aliphatisch oder cycloaliphatisch gebundenen Isocyanatgruppen.

Ausgangsdiisocyanate für diese katalytische Oligomerisierungsreaktion sind insbesondere aliphatische oder cycloaliphatische Diisocyanate eines über 139, vorzugsweise bei 140 bis 250 liegenden Molekulargewichts wie z.B. Tetramethylendiisocyanat, Hexamethylendiisocyanat (HDI), Dodecanmethylendiisocyanat, Cyclobutan-1,3-diisocyanat, Cyclohexan-1,3- und -1,4-diisocyanat, 1-Isocyanato-3,3,5-trimethyl-5-isocyanatomethylcyclohexan (IPDI), Perhydro-2,4- und/oder -2,6-diiyocyanatotoluol oder Perhydro-2,4'- und/oder -4,4'-diisocyanatodiphenylmethan oder beliebige Gemische dieser Diisocyanate.

Besonders bevorzugt wird 1,6-Diisocyanatohexan (HDI) als Ausgangsdiisocyanat eingesetzt.

Die erfindungsgemäßen Katalysatoren können bei der Herstellung von Uretdion- und Isocyanuratgruppen aufweisenden Polyisocyanaten auf unterschiedliche Weise verwendet werden. Einerseits können die erfindungsgemäßen Katalysatoren dem der Dimerisierungs- und Trimerisierungsreaktion zu unterziehenden Ausgangsdiisocyanat hinzugefügt und nach Erreichen des gewünschten Oligomerisierungsgrads nach Filtrieren aus dem Reaktionsgemisch entfernt werden. Andererseits eignen sich die erfindungsgemäßen Katalysatoren hervorragend als Festbettkatalysatoren für ein Vefahren, bei welchem die der Oligomerisierung zuzuführende Ausgangsdiisocyanate beispielsweise eine mit dem Katalysatoren befüllte und auf die Reaktionstemperatur erhitzte Reaktionskolonne durchlaufen.

Die Menge des eingesetzten Katalysators hängt bei der erfindungsgemäßen Verwendung nach einer dieser Varianten von der Reinheit des organischen Ausgangsdiisocyanats ab. Die jeweils notwendige Katalysatormenge läßt sich daher am einfachsten in einem Vorversuch bestimmen. Im Falle der Zugabe des Heterogenkatalysators zum zu oligomerisierenden Ausgangsdiisocyanat entspricht die Menge des Katalysators im allgemeinen einer Menge von 0,1 bis 5 mMol Phosphin/Mol Ausgangsdiisocyanat. Es können aber auch höhere Mengen eingesetzt werden, da die Reaktion jederzeit durch Abfiltration des Katalysators und Stabilisierung mit sauer wirkenden Zusatzmitteln gestoppt werden kann.

Oftmals ist es zweckmäßig, die katalytische Wirkung der erfindungsgemäßen Katalysatoren durch eine geringe Menge an cokatalytisch wirkenden Urethangruppen zu unterstützen. Eine derartige Cokatalyse ist beispielsweise durch Zusatz einer geringen Menge eines Alkohols (beispielsweise 0,01 bis 1 Gew.-%, bezogen auf das Gewicht des eingesetzten Ausgangsdiisocyanats) erreichbar, da die zugesetzten Alkohole sofort mit dem im Überschuß vorliegenden Ausgangsdiisocyanat unter Urethanbildung abreagieren. Geeignete derartige potentielle Cokatalysatoren sind beispielsweise Methanol, Ethanol, Ethylenglykol oder 2-Ethylhexandiol-1,3. Die Alkohole können gleichzeitig mit dem Hauptkatalysator oder vorab zugesetzt werden.

Gemäß einer bevorzugten Variante der Herstellung von Uretdion- und Isocyanuratgruppen aufweisenden Polyisocyanaten unter Verwendung der erfindungsgemäßen Katalysatoren werden in den Ausgangsdiisocyanaten vorliegende saure Verunreinigungen, die eine spontane Oligomerisierung verhindern, und die die erfindungsgemäßen Katalysatoren mit der Zeit desaktivieren würden, vorab durch Zusatz einer geringen Menge einer basisch wirkenden Komponente "neutralisiert", um zu erreichen, daß die Dimerisierungs- und Trimerisierungsreaktion bei Zugabe des Katalysators zum Ausgangsdiisocyanat unter den üblichen Reaktionsbedingungen spontan eintritt und abläuft. Die Menge derartiger "Neutralisierungszusätze" läßt sich einfach durch einen Vorversuch bestimmen. Im übrigen ist es sinnvoll als "Neutralisationsmittel" tertiäre Phosphine zu verwenden, wie sie in den erfindungsgemäßen Katalysatoren adsorbiert vorliegen, um so das Reaktionsgemisch nicht mit sonstigen Fremdsubstanzen zu belasten.

Die vorzugsweise unter Inertgasatmosphäre ablaufende Dimerisierungs- und Trimerisierungsreaktion wird vorzugsweise lösungsmittelfrei innerhalb des Temperaturbereichs von 0 bis 100°C, insbesondere von 20 bis 80°C durchgeführt, kann jedoch auch in Gegenwart von inerten Lösungsmitteln wie z.B. Kohlenwasserstoffen wie Toluol oder Xylol oder Estern, wie z.B. Butylacetat, erfolgen.

Die Reaktion wird im allgemeinen bei Erreichen eines Oligomerisierungsgrades von 5 bis 40, vorzugsweise 10 bis 30 %, abgebrochen. Dies entspricht Produktausbeuten von etwa 10 bis 80, vorzugsweise 20 bis 60 Gew.-%. Unter "Oligomerisierungsgrad" ist hierbei der Prozentsatz der Isocyanatgruppen zu verstehen, die während der Umsetzung unter Dimerisierung oder Trimerisierung abreagieren. Der genannte Oligomerisierungsgrad entspricht bei der bevorzugten Verwendung von HDI als Ausgangsdiisocyanat einem NCO-Gehalt des Reaktionsgemisches von 47,5 bis 30, vorzugsweise 45 bis 35 Gew.-%. Der Oligomerisierungsgrad kann während der Reaktion beispielsweise durch fortlaufende Bestimmung des Brechungsindex, oder des NCO-Gehaltes des Reaktionsansatzes verfolgt werden.

Bei der Oligomerisierungsreaktion entstehen im allgemeinen Dimerisierungsprodukte (Uretdione) der als Ausgangsmaterial eingesetzten Diisocyanate, die untergeordnete Mengen an Trimeren (Isocyanuraten) enthalten. Da diese jedoch stets in molarem Unterschuß vorliegen, ist es gerechtfertigt, die erfindungsgemäßen Katalysatoren als "Dimerisierungskatalysatoren" zu bezeichnen.

Bei der Heterogenkatalyse wird, wie bereits dargelegt, die Beendigung der Oligomerisierungsreaktion durch Abtrennen des Heterogenkatalysators bewirkt.

Die so erhaltenen Uretdion- und Isocyanuratgruppen aufweisenden Polyisocyanate werden üblicherweise durch Zusatz geringer Anteile an sauer wirkenden Zusatzmitteln stabilisiert, damit die oben erörterte Herstellung der spontanen Oligomerisierungsbereitschaft durch Neutralisation von sauren Verunreinigungen rückgängig gemacht wird. Für diesen Zweck sind Zusätze von sauer wirkenden Substanzen in Mengen von 0,05 bis 1 mMol pro Mol Isocyanatgruppen völlig ausreichend. Geeignete Stabilisatoren sind beliebige organische Säuren wie z.B. Sulfonsäuren wie beispielsweise Benzol- oder Toluolsulfonsäure oder saure Ester der Phosphorsäure wie beispielsweise Dibutylphosphat oder Di-(2-ethylhexyl)-phosphat. Derartige saure Zusätze können auch auf Trägermaterialien fixiert zum Einsatz gelangen (beispielsweise ®Sicapent der Fa. Merck AG, Darmstadt, bestehend im wesentlichen aus an Kieselgel fixiertes Phosphorpentoxid), wobei nach der Behandlung der Feststoff wieder abgetrennt wird.

Die Uretdion- und Isocyanuratgruppen aufweisenden Polyisocyanate können auf übliche Weise von flüchtigen Bestandteilen wie beispielsweise überschüssigem Ausgangsdiisocyanat und gegebenenfalls mitverwendetem Hilfslösungsmittel befreit werden. Auf diese Weise entstehen hochwertige, weitgehend monomerenfreie, Uretdion- und Isocyanuratgruppen aufweisende Lackpolyisocyanate mit aliphatisch und/oder cycloaliphatisch gebundenen Isocyanatgruppen, die, gegebenenfalls in mit Blockierungsmitteln für Isocyanatgruppen blockierter Form zur Herstellung von hochwertigen Polyurethanlacken, insbesondere Zweikomponenten-Polyurethanlacken eingesetzt werden können.

In den folgenden Beispielen beziehen sich alle Prozentangaben soweit nichts anderslautendes vermerkt auf Gewichtsprozente.

Beispiele

Ausgangsmaterialien:

Phosphine:

Nachstehend werden handelsübliches Tri-n-butylphosphin bzw. Tri-n-octylphosphin verwendet.

Adsorbens I:

Handelsüblicher, kugelförmiger Katalysatorträger auf Siliciumdioxid-Basis mit einer Teilchengröße (90 %) von ca. 2 bis 3 mm, einem Porenvolumen von 1,05 ml/g, einem Porendurchmesser von 15 nm und einer spezifischen Oberfläche von ca. 185 m$^2$/g (GRACE Bead Type Silica Catalyst Support C 15, Hersteller: Firma GRACE GmbH, D 6520 Worms).

Adsorbens II:

Handelsüblicher, kugelförmiger Katalysatorträger auf Siliciumdioxid-Basis mit einer Teilchengröße (90 %) von ca. 2 bis 3 mm, einem Porenvolumen von 1,05 ml/g, einem Porendurchmesser von 10 nm und einer spezifischen Oberfläche von ca. 280 m$^2$/g (GRACE Bead Type Silica Catalyst Support C 10).

Adsorbens III:

Handelsüblicher, kugelförmiger Katalysatorträger auf Basis eines Divinylbenzol-Polymerisats mit einer Teilchengröße (90 %) von 0,2 bis 0,8 mm, einem Porenvolumen von ca. 0,6 bis 0,65 ml/g, einem Porendurchmesser von 11 nm und einer spezifischen Oberfläche von ca. 500 bis 600 m$^2$/g (®LEWATIT VP OC 1062 der Bayer AG, Leverkusen).

Beispiel 1a (Herstellung eines Heterogenkatalysators)

40 g Adsorbens I werden in 100 ml Methanol aufgenommen. Unter Rühren/N$_2$ läßt man bei Raumtemperatur 1,8 g Tri-n-butylphosphin eintropfen und trennt nachfolgend das Methanol im Vakuum ab (30°C/30 mbar). Man erhält einen erfindungsgemäßen, rieselfähigen Heterogenkatalysator mit einem Phosphingehalt von 0,2 mmol Phosphin/g.

Beispiel 1b (Herstellung eines Heterogenkatalysators)

Entsprechend Beispiel 1a, jedoch unter Verwendung von 4,5 g Tri-n-butylphosphin. Man erhält einen erfindungsgemäßen, rieselfähigen Heterogenkatalysator mit einem Phosphingehalt von 0,5 mmol Phosphin/g.

Beispiel 2 (Herstellung eines Heterogenkatalysators)

Beispiel 1a wird wiederholt jedoch unter Verwendung von 270 g Adsorbens II, 300 g Ethanol und 30 g Tri-n-butylphosphin. Man erhält ebenfalls einen rieselfähigen erfindungsgemäßen Heterogenkatalysator mit einem Phosphingehalt von 0,5 mmol Phosphin/g.

Beispiel 3 (Herstellung eines Heterogenkatalysators)

Beispiel 1a wird wiederholt jedoch unter Verwendung von 60 g Adsorbens III, 100 g Isopropanol und 12 g Tri-n-octylphosphin. Man erhält einen erfindungsgemäßen rieselfähigen Heterogenkatalysator mit einem Phosphingehalt von 0,4 mmol Phosphin/g.

Beispiel 4 (erfindungsgemäße Verwendung)

840 g (5 Mol) 1,6-Diisocyanatohexan (HDI) werden unter Rühren und Stickstoffatmosphäre auf 55°C erwärmt und mit 0,1 g Tri-n-butylphosphin und der Gesamtmenge des frisch hergestellten Heterogenkatalysators nach Beispiel 1a versetzt. Das Reaktionsgemisch wird anschließend bei 54 bis 56°C gerührt, wobei gleichzeitig der Reaktionsfortgang über die zunehmenden Brechungsindices verfolgt wird. Nach 5 Stunden bei 54 bis 56°C ist ein Brechungsindex (23°C) von 1,4610 erreicht (Ausgangswert: 1,4522). Man filtriert vom Katalysator ab und stabilisiert das Filtrat durch Zugabe von 1,5 g Dibutylphosphat. Schließlich wird das Produkt durch Dünnschichtdestillation bei 160°C/0,1 mbar bis auf einen Restgehalt von 0,2 % von überschüssigem HDI befreit. Es resultiert ein klares, fast farbloses Uretdion- und Isocyanuratgruppen aufweisendes Polyisocyanat mit einem NCO-Gehalt von 22,7 % und einer Viskosität (23°C) von 110 mPa.s. Die Ausbeute, bezogen auf ursprünglich eingesetztes HDI beträgt 24 %. Gehalt an freiem HDI: 0,2 %.

Zusammensetzung nach $^{13}$C-NMR (Mol-%):
Uretdion: 80
Isocyanurat: 20

Beispiel 4a
(Wiederverwendung von Katalysator und gedünnschichtetem HDI aus Beispiel 4)

Der Heterogenkatalysator aus Beispiel 4 wird mit 278 g (1,7 Mol) frischem HDI und 562 g (3,3 Mol) gedünnschichtetem HDI aus Beispiel 4 zur Reaktion gebracht. Nach 16 Stunden bei 23 bis 26°C ist ein Brechungsindex (23°C) von 1,4594 erreicht. Die Aufarbeitung gemäß Beispiel 4 ergibt ein farbloses Produkt mit den Daten:
Ausbeute: 20 %
NCO-Gehalt: 23,4 %
Viskosität (23°C): 120 mPa.s
Gehalt an freiem HDI: 0,3 %
Uretdion: 71 Mol-%
Isocyanurat: 29 Mol-%

Beispiel 5 (erfindungsgemäße Verwendung)

840 g (5 Mol) HDI werden unter Rühren/N$_2$ auf 60°C erwärmt und mit 2 g 2-Ethylhexandiol-1,3, 0,4 g Tri-n-butylphosphin und 20 g Heterogenkatalysator nach Beispiel 2 versetzt. Nach 4 Stunden bei 60°C ist ein Brechungsindex (23°C) von 1,4622 erreicht. Die Aufarbeitung gemäß Beispiel 4 ergibt ein fast farbloses Produkt mit den Daten:
Ausbeute: 27,5 %    freies HDI: 0,2 %
NCO-Gehalt: 22,2 %
Viskosität (23°C): 130 mPa.s
Uretdion: 88 Mol-%
Isocyanurat: 12 Mol-%

Beispiel 6 (erfindungsgemäße Verwendung)

Beispiel 5 wird wiederholt. Nach 7,5 Stunden ist ein Brechungsindex (23°C) von 1,4683 erreicht. Die Aufarbeitung gemäß Beispiel 4 ergibt ein fast farbloses Produkt mit den Daten:
Ausbeute: 41,4 %    freies HDI: 0,1 %
NCO-Gehalt: 21,4 %
Viskosität (23°C): 170 mPa.s
Uretdion: 84 Mol-%
Isocyanurat: 16 Mol-%

Beispiel 7 (erfindungsgemäße Verwendung)

Beispiel 5 wird wiederholt mit der Maßgabe, daß der Heterogenkatalysator nach Beispiel 2 durch 20 g Heterogenkatalysator nach Beispiel 3 ersetzt wird. Nach 6 Stunden ist ein Brechungsindex (23°C) von 1,4654 erreicht. Die Aufarbeitung gemäß Beispiel 4 ergibt ein fast farbloses Produkt mit den Daten:

Ausbeute: 36,4 %     freies HDI: 0,2 %
NCO-Gehalt: 21,9 %
Viskosität (23°C): 160 mPa.s
Uretdion: 85 Mol-%
Isocyanurat: 15 Mol-%

Beispiel 8

1008 g (6 Mol) HDI werden unter Rühren/N$_2$ auf 60°C erwärmt und mit 23 g Heterogenkatalysator nach Beispiel 1b versetzt. Nach 5 Stunden bei 60°C ist ein Brechungsindex (23°C) von 1,4635 erreicht. Die Aufarbeitung gemäß Beispiel 4 mit 2 g Dibutylphosphat ergibt ein fast farbloses Produkt mit den Daten:
Ausbeute: 29 %     freies HDI: 0,2 %
NCO-Gehalt: 22,4 %
Viskosität (23°C): 130 mPa.s
Uretdion: 78 Mol-%
Isocyanurat: 22 Mol-%

Beispiel 8a
(Wiederverwendung von Katalysator und zurückgewonnenem HDI aus Beispiel 8)

Der Heterogenkatalysator aus Beispiel 8 wird mit 638 g (3,8 Mol) frischem HDI und 370 g (2,2 Mol) wiedergewonnenem HDI bei 60°C zur Reaktion gebracht. Nach 8 Stunden bei 60°C ist ein Brechungsindex (23°C) von 1,4700 erreicht. Die Aufarbeitung gemäß Beispiel 4 ergibt:
Ausbeute: 43,1 %     freies HDI: 0,2 %
NCO-Gehalt: 22,2 %
Viskosität (23°C): 240 mPa.s
Uretdion: 74 Mol-%
Isocyanurat: 26 Mol-%

Beispiel 8b
(Wiederverwendung von Katalysator und zurückgewonnenem HDI aus Beispiel 8a)

Der Heterogenkatalysator des Beispie 8a wird mit 504 g (3 Mol) frischem HDI und 504 g wiedergewonnenem HDI bei 23 bis 26°C zur Reaktion gebracht. Nach 18 Stunden bei 23 bis 26°C ist ein Brechungsindex (23°C) von 1,4655 erreicht. Danach wird vom Katalysator abgetrennt, das Produkt mit 7,5 g ®Sicapent (Fa. Merck) 40 Minuten gerührt, vom Sicapent abfiltriert und gemäß Beispiel 4 gedünnschichtet. Man erhält ein fast farbloses Produkt mit den Daten:
Ausbeute: 32 %     freies HDI: 0,3 %
NCO-Gehalt: 22,1 %
Viskosität (23°C): 190 mPa.s
Uretdion: 70 Mol-%
Isocyanurat: 30 Mol-%

**Patentansprüche**

1. Für die Heterogenkatalyse geeignete Dimerisierungskatalysatoren für organische Isocyanate, bestehend aus an porösen Trägermaterialien adsorbiert vorliegenden tertiären Phosphinen, dadurch gekennzeichnet, daß das Trägermaterial aus einem Adsorbens der Korngröße (90 %) 0,1 bis 10 mm, eines Porenvolumens von 0,4 bis 1,4 ml/g, eines mittleren Porendurchmessers von 5 bis 50 nm und einer spezifischen Oberfläche (BET) von 100 bis 700 m$^2$/g besteht.

2. Verfahren zur Herstellung von Dimerisierungskatalysatoren gemäß Anspruch 1 durch Aufziehen von tertiärem Phosphin, gegebenenfalls unter Mitverwendung von inerten Lösungsmitteln auf ein Trägermaterial, dadurch gekennzeichnet, daß das Trägermaterial aus einem Adsorbens der Korngröße (90 %) 0,1 bis 10 mm, eines Porenvolumens von 0,4 bis 1,4 ml/g, eines mittleren Porendurchmessers von 5 bis 50 nm und einer spezifischen Oberfläche (BET) von 100 bis 700 m$^2$/g besteht.

3. Verfahren gemäß Anspruch 2, dadurch gekennzeichnet, daß man als tertiäre Phosphine Trialkylphosphine mit insgesamt 12 bis 24 Kohlenstoffatomen verwendet.

4. Verwendung der Katalysatoren gemäß Anspruch 1 bei der Herstellung von Uretdion- und Isocyanuratgruppen aufweisenden Polyisocyanaten durch Oligomerisierung eines Teils der Isocyanatgruppen von organischen Diisocyanaten.

5. Verwendung gemäß Anspruch 4 zur Herstellung von Uretdion- und Isocyanuratgruppen aufweisenden Polyisocyanaten auf Basis von Ausgangsdiisocyanaten mit aliphatischen und/oder cycloaliphatisch gebundenen Isocyanatgruppen.

Europäisches
Patentamt

EUROPÄISCHER
RECHERCHENBERICHT

Nummer der Anmeldung

EP 91 11 3488

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 379 914 (BAYER AG)<br>* Seite 4, Zeile 23 - Seite 5, Zeile 3; Anspruch 1 *<br>– – – | 1,2,4,5 | C 08 G 18/79<br>B 01 J 31/24<br>B 01 J 32/00 |
| A,D | EP-A-0 337 116 (BAYER AG)<br>* Anspruch 1 & DE-A-3809261 *<br>– – – | 1,4,5 | |
| A | CHEMICAL ABSTRACTS, vol. 100, no. 2, 03 Januar 1984 Columbus, Ohio, USA O.V. MAIBA et al.: "Oligomerization of 1,6-hexamethylene diisocyanate in the presence of triamyl-phosphine" Seite 3; ref. no. 7216S<br>& Vysokomol. Soedin., Ser. B 1983, 25[9], 672-5<br>* Zusammenfassung *<br>– – – | 1,4,5 | |
| A,D | EP-A-0 173 252 (BAYER AG)<br>* Anspruch 1 & DE-A-3432081 *<br>– – – | 1,4,5 | |
| A | EP-A-0 226 109 (BAYER AG)<br>* Ansprüche 1, 2 *<br>– – – | 1,4,5 | |
| A,D | DE-A-1 670 720 (FARBENFABRIKEN BAYER AG)<br>* Anspruch 1 *<br>– – – – – | | |

RECHERCHIERTE
SACHGEBIETE (Int. Cl.5)

B 01 J 31/00
B 01 J 32/00
C 08 G 18/00

Der vorliegende Recherchenbericht wurde für alle Patentansprüche erstellt

| Recherchenort | Abschlußdatum der Recherche | Prüfer |
|---|---|---|
| Berlin | 12 Dezember 91 | HASS C V F |